# EUROPEAN PATENT APPLICATION

(11) **EP 4 435 986 A1**
(43) Date of publication of application: **25.09.2024**
(21) Application number: 24165564.6
(22) Date of filing: 22.03.2024
(51) Int. Cl.: H02G 15/113, H02G 5/00, H01R 4/46, H02G 15/013

(54) **CABLE SPLICE SYSTEM**

(30) Priority: 22.03.2023 US 202363491561 P
(71) Applicant: Erico International Corporation, Solon, OH 44139 (US)
(72) Inventor: GODARD, Pascal, St. Georges Haute Ville (FR); GAILLARD, Guillaume, Veauche (FR); BIZET, Frederic, Chatillon d'Azergues (FR)
(74) Representative: Barker Brettell LLP

(57) **Abstract**

A splice assembly (120) for conductor (104) can include an enclosure (124), a splice plate (202), and one or more clamps (200). The enclosure (124) can include a first aperture (140) and a second aperture (140) that receive a first conductor (104) and a second conductor (104). The first conductor (104) can extend through the first aperture (140) and can be secured to the splice plate (202) with a first clamp (200). The second conductor (104) can extend through the second aperture (140) and can be secured to the splice plate (202) with a second clamp (200).

## Description

### BACKGROUND

In some electrical grids, high-to-low voltage transformers or other electrical modules can supply power to power distribution modules, which may distribute the power to individual power taps or access points. For example, a transformer can be linked to a power distribution module (e.g., cabinet) that supplies power to the lights, outlets, and any other electronic devices in a residential home or a commercial space. Similarly, other transmission of low voltage power between modules may also be useful in a variety of contexts.

### SUMMARY

Some examples of the disclosed technology provide a splice assembly for conductor including an enclosure, a splice plate, a first conductor and a second conductor. The enclosure can include a first aperture and a second aperture. The splice plate can be secured within the enclosure. The first conductor (e.g., an oblong conductor) can extend through the first aperture and secured to the splice plate with a first clamp, and the second conductor (e.g., an oblong conductor) can extend through the second aperture and can be secured to the splice plate with a second clamp.

Some examples of the disclosed technology provide a connection assembly for conductors including a conductive plate. A first conductor can be secured to the conductive plate with a first clamp and a second conductor can be secured to the conductive plate with the first clamp.

Some examples of the disclosed technology provide a method of connecting conductors. The method can include securing a first conductor and a second conductor (e.g., two oblong conductors) to a conductive plate with a first clamp. In some cases, the second conductor can be arranged on an opposite side of the first conductor from the conductive plate. In some cases, the second conductor can be in conductive connection with the conductive plate via the first conductor or each of the first conductor and the second conductor is seated on the same side of the conductive plate.

Some examples of the disclosed technology provide a method of connecting conductors. The method can include inserting a first conductor through a first aperture of an enclosure and inserting a second conductor through a second aperture of the enclosure. The first conductor and the second conductor can be secured to a splice plate within the enclosure with a first clamp and a second clamp respectively.

Some examples of the disclosed technology provide a splice assembly for conductors including an enclosure, a splice plate, a first clamp, a second clamp, a first conductor, and a second conductor. The enclosure can include a first aperture and a second aperture. The splice plate can be secured within and surrounded by the enclosure. The first clamp can be secured at a first end of the splice plate. The second clamp can be secured at a second end of the splice plate. The first conductor can extend through the first aperture and can be secured to the splice plate with the first clamp and the second conductor can extend through the second aperture and can be secured to the splice plate with the second clamp to be electrically connected to the first conductor via the splice plate.

In some examples, the splice assembly can further include a third conductor that can extend through the first aperture and can be secured to the splice plate to be electrically connected to the second conductor via the splice plate, and optionally or preferably, the third conductor can be secured to the splice plate with the first clamp.

In some examples, the first and third conductors can be secured on the same side of the splice plate.

In some examples, the first and third conductors can be arrayed laterally across the splice plate, with both of the first and third conductors contacting the splice plate to provide a respective electrical connection with the splice plate, and optionally or preferably, the first conductor can define a first oblong cross-section, the second conductor can define a second oblong cross-section, and the first and second conductors can be secured to the splice plate with oblong axes of the first and second oblong cross-sections extending away from the splice plate.

In some examples, the first and third conductors can be stacked together on the splice plate, with the first conductor between the third conductor and the splice plate to electrically connect the third conductor to the splice plate, and clamping force to secure each of the first and third conductors to the splice plate can be transmitted through the other of the first and third conductors.

In some examples, the first clamp can include a first clamp body, a second clamp body, and a first spacer that can include a base seated on the splice plate and legs extending away from the splice plate on opposing sides of the base. The first conductor can be secured to the splice plate with the first and second clamping body tightened to clamp the first conductor, with the first conductor extending along the base between the legs.

In some examples, one or more of the first clamping body or the spacer can be secured to the splice plate with one or more fasteners and, optionally or preferably, the first clamping body and the spacer can be collectively secured to the splice plate with one or more of the same fasteners.

In some examples, the splice assembly can further include a collectively removable sub-assembly that can include the splice plate, an insulation plate secured within the enclosure, with the insulation plate electrically insulated from exterior walls of the enclosure, and support posts that can be secured to the insulation plate and to the splice plate, with the support posts spacing the splice plate apart from the insulation plate.

In some examples, the sub-assembly can further include a support plate that can be secured to the insulation plate to be disposed between the insulation plate and splice plate, optionally or preferably with the support plate adjacent to the insulation plate and side flanges of the support plate extending away from the insulation plate.

In some examples, the first conductor can extend through a first cable entry arranged to seal the first aperture around the first conductor and the second conductor can extend through a second cable entry arranged to seal the second aperture around the second conductor.

Some examples, of the disclosed technology provide for a power distribution assembly can include a plurality of conductors and array of splice assemblies. The plurality of conductors can be arranged to transmit power between a plurality of electrical components. Each of the splice assemblies electrically can connect corresponding one or more sets of conductors of the plurality of conductors. Optionally or preferably one or more of the plurality of conductors can include a plurality of oblong conductors or the electrical components that can include a transformer and a power distribution module.

Some examples of the disclosed technology provide for a method of connecting conductors. The method can include extending a first conductor through a first aperture of an enclosure, extending a second conductor through a second aperture of the enclosure, securing the first conductor to a splice plate with a first clamp, the splice plate can be secured within the enclosure, and securing the second conductor to the splice plate with a second clamp so that the second conductor can be electrically connected to the first conductor via the splice plate.

In some examples, the method of connecting conductors can further include securing multiple conductors to the splice plate with the first clamp, including the first conductor and a third conductor. The third conductor can be arranged on an opposite side of the first conductor from the splice plate, with the third conductor in conductive connection with the splice plate via the first conductor or the first conductor and the third conductor can be both seated on the splice plate on the same side of the splice plate.

In some examples, the splice plate can be installed into and secured within the enclosure as part of a collectively removable sub-assembly that can include an insulation plate, the splice plate, and spacers that space the splice plate apart from the insulation plate.

In some examples, the method of connecting conductors can further include after securing the first and second conductors to the splice plate, securing a removable cover to close the enclosure to surround the splice plate.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with one of the assemblies or feature(s) thereof may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosed technology and, together with the description, serve to explain the principles of examples of the disclosed technology:
FIG. 1 is a schematic view of a power distribution system according to an example of the disclosed technology, the power distribution system including a transformer, a power distribution module, and a low voltage power conductor;
FIG. 2 is an axonometric, partly schematic view of part of the power distribution system of FIG. 1 according to an example of the disclosed technology, including a plurality of example splice assemblies;
FIG. 3A is an axonometric view of an example configuration of the splice assemblies of FIG. 2, showing one splice assembly with an enclosure removed to show an internal connection assembly.
FIG. 3B is an axonometric detail view of the splice assembly of FIG. 3A with the enclosure removed;
FIG. 4 is an axonometric view of another example configuration for the splice assemblies of FIG. 2, with a cover removed and an enclosure rendered transparent to show an internal connection assembly;
FIG. 5 is an exploded view of the splice assembly of FIG. 4 with the enclosure removed;
FIG. 6 is a top plan view of the splice assembly of FIG. 4;
FIG. 7 is a side elevation view of the splice assembly of FIG. 4;
FIGS. 8 is an isometric partial view of an example enclosure and example cable entries for the splice assemblies of FIG. 2 ;
FIGS. 9-11D are views of example connection assemblies to secure conductors within the splice assemblies of FIG. 2;
FIG. 12 is an isometric view of another example configuration for the splice assemblies of FIG. 2, with an insulation plate and an enclosure rendered transparent to show an internal connection assembly;
FIG. 13 is a top plan view of the splice enclosure system of FIG. 12;
FIG. 14 is a side elevation view of the splice enclosure system of FIG. 12; and
FIGS. 15 and 16 are axonometric views of other example configurations of the splice assemblies of FIG. 2, with an enclosure rendered transparent to show an internal connection assembly.

### DETAILED DESCRIPTION

Before any examples of the disclosed technology are explained in detail, it is to be understood that the disclosed technology is not limited in its application to the details of construction and the arrangement of components set forth in the following description or illustrated in the following drawings. The disclosed technology is capable of other implementations and of being practiced or of being carried out in various ways.

The following discussion is presented to enable a person skilled in the art to make and use examples of the disclosed technology. Various modifications to the illustrated examples will be readily apparent to those skilled in the art, and the generic principles herein can be applied to other examples and applications without departing from examples of the disclosed technology. Thus, the disclosed technology is not intended to be limited to examples shown, but is to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosed technology. Skilled artisans will recognize the examples provided herein have many useful alternatives and fall within the scope of examples of the disclosed technology.

As noted above, in some contexts, it may be useful to electrically link a high-to-low voltage transformer to a power distribution module or otherwise provide for transmission of low voltage electrical power between different electrical modules (e.g., between known types of low-voltage equipment or enclosures). Examples of the disclosed technology can be useful for this purpose, and others.

For example, some implementations of the disclosed technology may include splice assemblies that can securely connect together low voltage conductors in series (and parallel) along a power transmission path. Some examples can thus secure low voltage conductors with oblong cross-sections (e.g., conductors formed from braided wires with generally rectangular exterior cross sectional profiles). In some examples, such splice assemblies can securely connect conductors together in a variety of configurations, with corresponding benefits for adaptability to particular facilities. In some examples, particularly compact and mechanically robust splice assemblies can be provided.

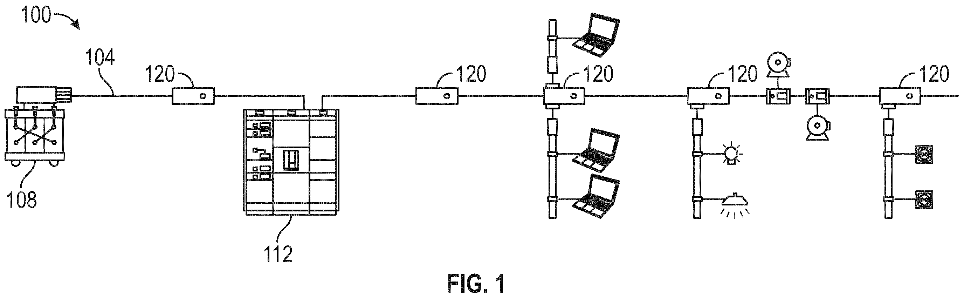

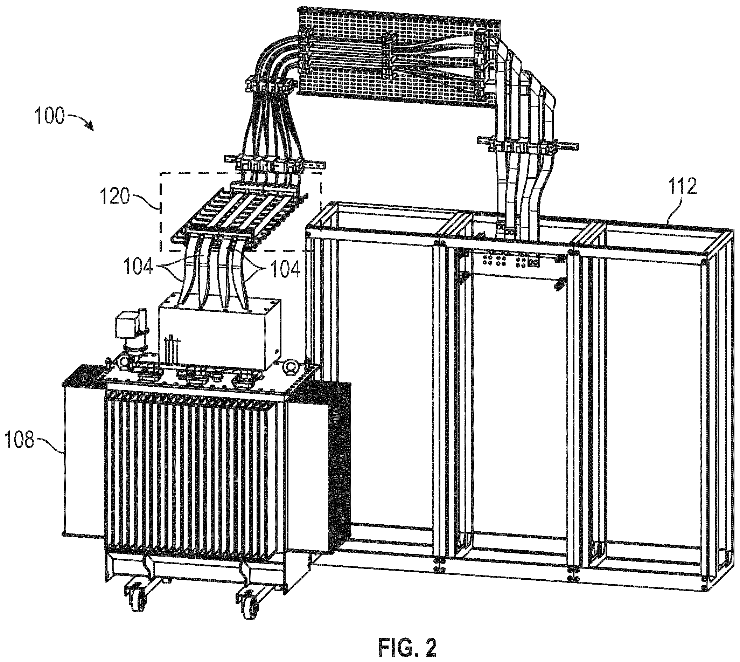

FIGS. 1 and 2 illustrate example configurations of a power distribution system 100 configured to distribute power from an electrical grid to various electrical components (e.g., end-use devices), according to some examples of the disclosed technology. Although examples of the disclosed technology can be used in other settings, implementation in the illustrated configuration may be particularly advantageous in some cases. As shown in FIG. 2 in particular, in the illustrated embodiment, the power distribution system 100 includes a set of low voltage power conductors 104 that are attached to a transformer 108 and a power distribution module 112 (e.g., switch cabinet or other known distribution system) at respective attachment points for each of the conductors 104 at the transformer 108 and the power distribution module 112, respectively.

As illustrated herein, the conductors 104 are presented partly schematically, with oblong, generally rectangular conductive elements and surrounding insulation. In particular examples, the conductors 104 can be braided or other conductors with oblong cross-sections. For example, the conductors 104 can be braided, oblong, insulated conductors, rated for particular voltage or current capacities, as described in U.S. non-provisional patent application no. 16/868,409 (U.S. patent publication no. 2020/0357538A1). The use of splice assemblies as described herein may be particularly advantageous with braided oblong conductors, with regard to security of attachment and adaptability of installation. Correspondingly, the details discussed herein relative to the disclosed splice assemblies may in some cases both complement and extend the advantages of such conductors relative to installation and service.

The low voltage power conductors 104 electrically link the power distribution module 112 to the transformer 108, which is connected to the power grid, thereby supplying power to the power distribution module 112. From the power distribution module 112, power can then be distributed to other electronics over various types, including by using similar conductors to the conductors 104 or others.

In some cases, a particular low voltage power conductor may not be long enough to connect the transformer 108 with the power distribution module 112 (or to connect other relevant components). In this case, longer conductors can sometimes be used. However, longer conductors can be heavy, bulky, and difficult to install. Moreover, use of shorter conductor lengths overall may provide increased adaptability of conductor systems to needs of a particular installation, including relative to changes over time.

As illustrated in FIG. 2, the power distribution system 100 may thus include a plurality of connection nodes that include splice assemblies 120 to connect corresponding lengths of the conductors 104 (and, correspondingly, various branches or other structures of the system 100 at large). Accordingly, the splice assemblies 120 can allow the use of shorter (and more maneuverable) lengths of conductors, for improved overall efficiency and adaptability in installation operations. Further, the splice assemblies 120 can allow highly adaptable expansion of overall reach or complexity of a conductor assembly to accommodate for demand growth or other changes over time. For example, appropriately configured installations of the splice assemblies 120 may allow for efficient expansion of the numbers of nodes, branches, or connected sub-systems for the system 100, or for efficient general extension of total conductor length of the system 100.

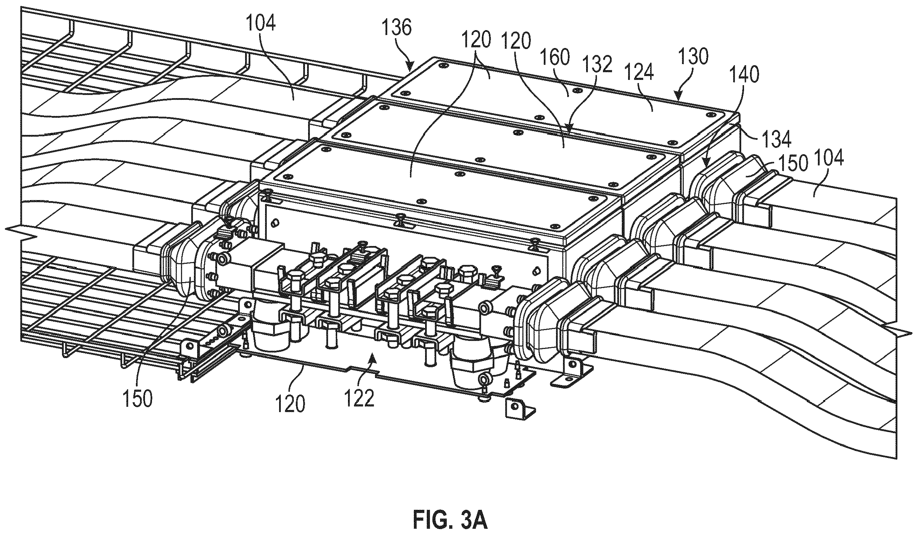

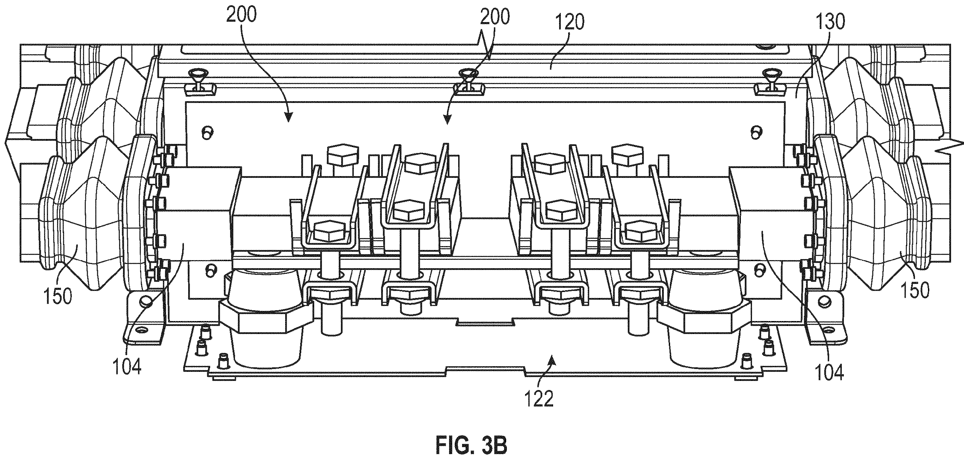

FIGS. 3A and 3B illustrate an example configuration for the splice assemblies 120 of FIG. 2, each including a respective connection assembly 122 (one shown). The connection assemblies can be enclosed and appropriately isolated within respective enclosures 124 (e.g., electrically insulated or fully mechanically shielded from the exterior environment). In FIGS. 3A and 3B, the enclosure has been removed for one of the splice assemblies 120 to show the internal features of the connection assembly 122 and other details.

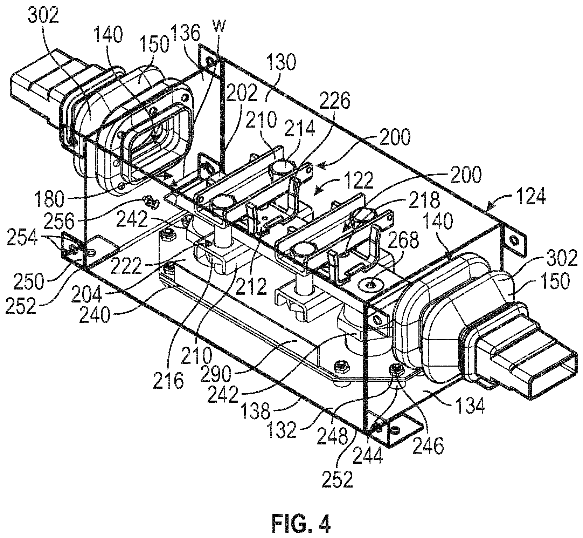

Notably, the connection assemblies 122 - like the assemblies 120 overall - can be variably adapted to accommodate the connection needs of particular installations. In this regard, particular examples of the connection assemblies 122 and arrangements of conductors secured thereby are presented in FIGS. 4-7 and 9-11D and further discussed below. In some examples, each splice assembly of an array can include the same internal connection assembly (e.g., as possible in some configurations of the array shown in FIGS. 3A and 3B). In some examples, different splice assemblies of an array (e.g., the same array as shown in FIGS. 3A and 3B) can exhibit different internal connection assemblies.

The enclosure 124 can exhibit different geometries, as appropriate to enclose particular internal assemblies or provide structures to be secured in a relevant installation (e.g., mounted on DIN rails, to wire cable trays, or otherwise attached to support structures of a building or other installation site). As shown in FIG. 3A in particular, an example configuration of the enclosure 124 includes a first side wall 130 and a second side wall 132 opposite to the first side wall 130, both extending along a longitudinal direction parallel to the directions of the conductors 104. A third side (end) wall 134 extends orthogonally between the first side wall 130 and the second side wall 132. A fourth side (end) wall 136 is disposed opposite of the third side wall and extends orthogonally between the first side wall 130 and the second side wall 132. Additionally, the enclosure 124 includes a bottom wall 138 (see FIG.4) and a cover 160 (as also discussed below), so that an enclosed internal area is defined by the walls 130, 132, 134, 136, 138, and the cover 160, and is accessible from outside the enclosure 124 when the cover 160 is removed. Although the bottom wall 138 is oriented downward relative to gravity in the illustrated example, splice assemblies as disclosed herein, including the illustrated configurations of the splice assemblies 120 can also generally be installed in other orientations.

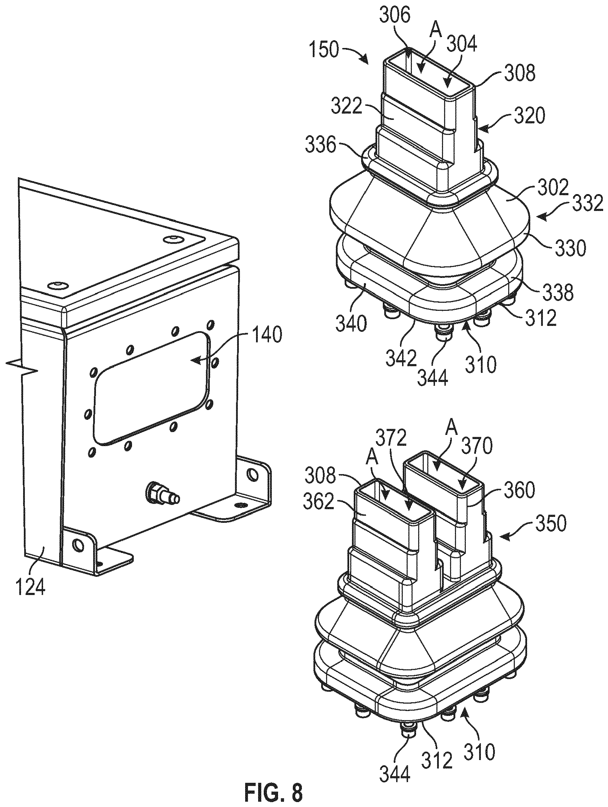

The third side wall 134 and the fourth side wall 136 each include an aperture 140 that receives one or more corresponding conductors into the internal area. In particular, some configurations can include connectors at the apertures 140, including sealing connectors of various types (e.g., as further discussed relative to FIG. 8). For example, the illustrated config include cable entries 150 that are flexible, to allow conductors 104 to pass into the enclosure 124 (i.e., to be secured and conductively engaged therein by the connection assembly 122).

As shown in FIG. 4, two of the apertures 140 can be aligned with each other on opposing side walls of an enclosure. Generally, particular alignments of opposed (or other) apertures 140 may allow for particular conductors (e.g., in particular arrays) to be received through the apertures in alignment to be secured by the corresponding connection assembly 122 (e.g., with conductors thereby arranged in to be secured in particular arrays to a common splice plate). In some examples, including as shown in FIG. 4 and further detailed below, sets of the apertures 140 can be aligned so that conductors received through the apertures 140 are substantially coaxial with each other (e.g., as shown for the conductors 104 in FIG. 3B). Correspondingly, for example, central axes of particular sets of apertures 140 - as defined perpendicular to a plane of the respective aperture 140 - may be overlapping (coaxial) in some configurations, or may be offset from each other by an offset distance. For example, particular offset distances between sets of the apertures 140 can correspond to an offset for particular conductors within an array of conductors secured by the relevant connection assembly 122 (e.g., in any of the arrays generally illustrated and discussed relative to any of FIGS. 3A through 16). However, other examples can include apertures that are otherwise arranged on an enclosure (e.g., at different locations, on different sides, or in different numbers or alignments).

As noted above, a cover can be included in some examples. For example, the cover 160 can be configured as a top cover that is coupled along a top portion of the first, second, third, and fourth side wall 130, 132, 134, 136, opposite to the bottom wall 138. A cover can be removably secured in some cases (e.g., with threaded fasteners), can include gaskets or other structures to provide improved sealing, or can be arranged at various locations on an enclosure to provide appropriate access.

Different enclosures can be formed in different ways. For example, one or more sets of the walls of the enclosure 124 can be coupled together using welds, fasteners, or various known integral formation techniques (e.g., bending of metal sheets). Similarly, some enclosures may exhibit different shapes or sizes, including as discussed below. However, a rectangular enclosure that is elongate along a common entrance and exit direction for secured conductors (e.g., as variously shown) may be particularly suitable for adaptable, modular assembly and installation.

In different implementations, different connection assemblies can be used. Correspondingly, connection assemblies illustrated for certain examples herein (e.g., in FIGS. 3B, 4 and 9-11D) can be substituted (or added) into other examples as appropriate (e.g., FIGS. 4 and 3B).

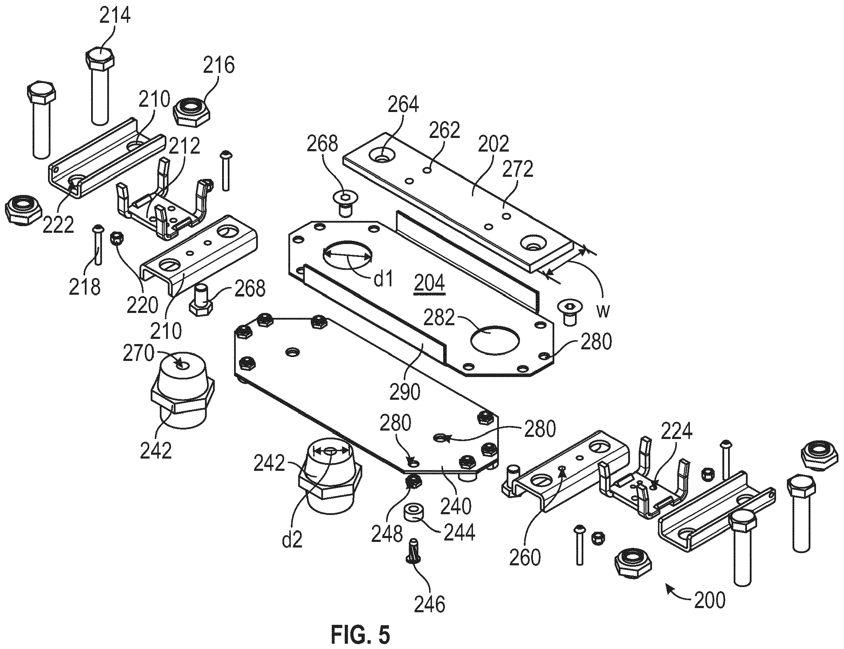

As one example, FIGS. 4 and 5 illustrate a particular configuration of the connection assembly 122. In FIG. 4, the enclosure 124 is rendered with transparency to illustrate internal structures within an internal volume 180 defined by the enclosure 124 and the connection assembly 122 fully enclosed within the internal volume 180. Conductors secured to the connection assembly 122 are not shown in FIGS. 4 and 5, for clarity of presentation.

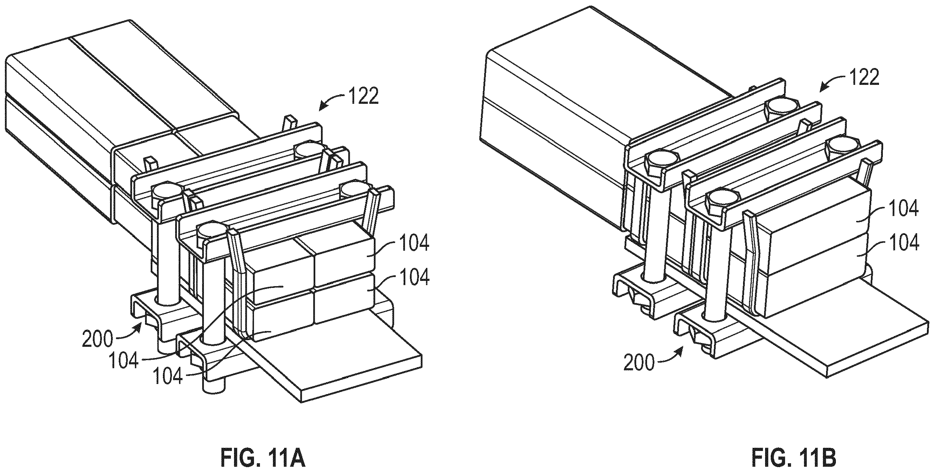

In the illustrated example, the connection assembly 122 includes two clamp assemblies 200, a splice plate 202, an insulation plate 240, and a support plate 204. The clamp assemblies 200 respectively include a set of clamp bodies 210, a clamp spacer 212, and fasteners including a pair of clamping bolts 214, a pair of clamping nuts 216, a pair of securing bolts 218 and a pair of securing nuts 220 (see FIG. 5). In other examples, other fasteners or fastener arrangements can alternatively be used to provide the various structural connections for clamp assemblies, including further discussed below. Further, although the assemblies 200 are substantially identical in the illustrated example, non-identical clamp assemblies can be used in some cases (e.g., on opposing ends of a splice plate). Similarly, in some examples, clamp assemblies - and splice assemblies overall - can receive conductors at different locations on a splice plate than shown in FIG. 4 (e.g., corresponding to configurations illustrated in FIGS. 11A through 11D).

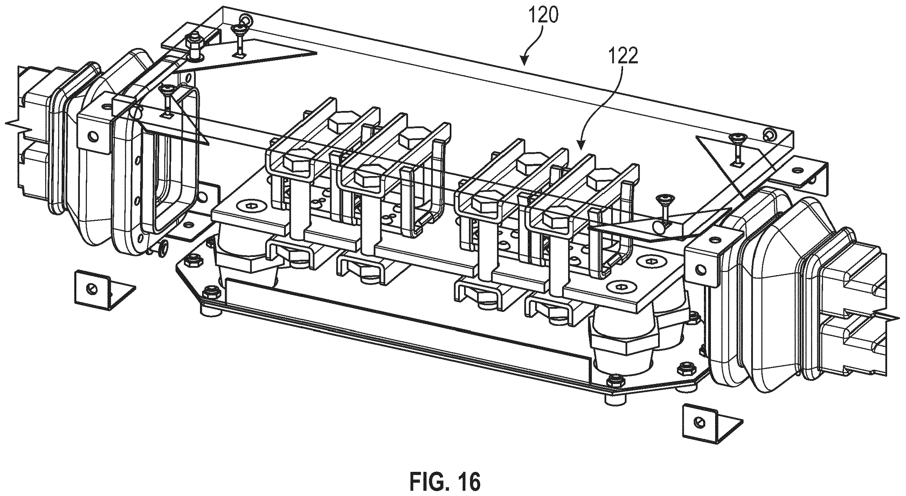

In the illustrated example, the set of clamp bodies 210 are clamped together by the clamping bolts 214 and the clamping nuts 216 through a bolt hole 222. In the illustrated example, the bolt holes 222 are separated from each other by at least a width W of the splice plate 202 (see FIG. 5), so that the bolts 214 can extend on opposing sides of the splice plate 202. In other examples, other configurations are possible. For example, as shown in FIG. 16, a splice plate of one configuration of the connection assembly 122 can include bolt holes disposed along a periphery of the splice plate at opposing lateral sides, or in other configurations (e.g., formed as openended slots that can receive bolts transverse to the bolt axes).

When the clamp bodies 210 are secured to clamp a conductor (see, e.g., FIG. 3B) the clamp spacer 212 can be sandwiched between the set of clamp bodies 210 and the splice plate 202, to help secure the conductor and provide good conductive contact with the splice plate 202. In the illustrated examples, the clamp spacers 212 includes legs 226 that can straddle the relevant conductor 104 to improve the clamped connection with the conductor 104. In other examples, however, other clamp spacers are possible, as well as other clamps in general (e.g., of various known types for mechanically securing conductors together to provide electrical connections).

As shown in FIG. 4 in particular, the splice plate 202 is spaced at a first distance away from the insulation plate 240 and support posts 242 extend between the splice plate 202 and the insulation plate 240. For example, the support post 242 can be coupled to the splice plate 202 at one end and to the insulation plate 240 at the opposite end by one or more fasteners (e.g., bolts, screws, etc.).

The insulation plate 240 is spaced at a second distance away from the bottom wall 138 of the enclosure 124 (e.g., with a spacer washer 244 placed between the insulation plate 240 and the bottom wall 138, with a thickness that is at least a desired distance between the bottom wall and the insulation plate 240). A mounting bolt 246 and a mounting nut 248 (see FIG. 4) can be used to securely couple the bottom wall 138, the spacer washer 244, and the insulation plate 240, and also the support plate 204, in some cases. In some cases, the support plate 204 can be formed from metallic or other relatively rigid material, to provide additional structural support to the insulation plate 240 and the connection assembly 122 overall (e.g., as part of a removable sub-assembly, as further detailed below).

The support post 242 and the spacer washer 244, and other related components (e.g., bolts or other fasteners) may be manufactured from insulating materials. Thus, as installed, these components can help to prevent the conductors (see FIG. 3A), the splice plate 202, or other live components from transferring electricity to the enclosure 124. In some examples, the support posts 242 and the spacer washer 244 may be manufactured from identical material as the insulation plate 240.

In some examples, the insulation plate 240 and the support plate 204 can be positioned adjacent to each other. In some examples, the shape of the insulation plate 240 may be identical to the shape of the support plate 204. Alternatively, the shape of the insulation plate 240 may be different from the shape of the support plate 204. In some examples, the insulation plate 240 and the support plate 204 can be formed integrally (e.g., both out of an insulating material) or the support plate 204 may not be included at all. Correspondingly, for example, discussion herein of spacing or other details regarding the combination of the insulation plate 240 and the support plate 204 (or either of the plates 204, 240, individually) should generally be understood to similarly apply to configurations with only an insulation plate, or with an integrally formed combination of insulation and support plates.

To provide for adaptable mounting in various installations, an enclosure can include or be attached to various brackets or other attachment structures. In some examples, as shown in FIG. 4, one or more brackets 250 can extend outwardly from the corners 252 of the enclosure 124. In particular, the brackets 250 include a set of angled plates, each of which includes a hole 254 for a fastener. Accordingly, the brackets 250 can be used to secure the enclosure 124 in a variety of orientations, to a variety of support structures.

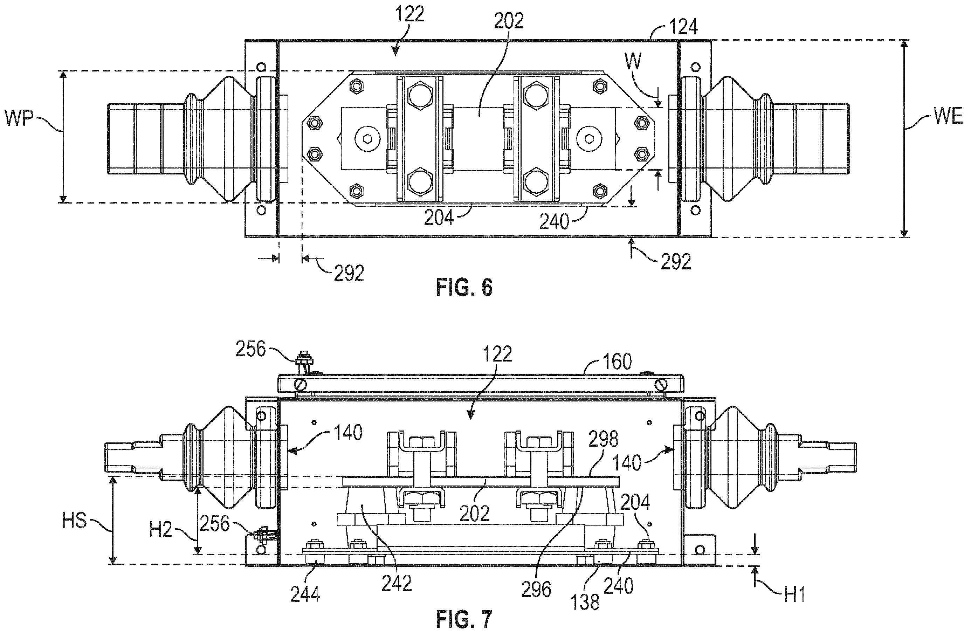

In some cases, an enclosure may include grounding features. For example, the enclosure 124 may include one or more protrusions or studs 256 that extends outwardly from the enclosure 124 to provide a grounding feature. As shown in FIGS. 4 and 7, in one configuration, two studs 256 can be arranged to extend below one of the apertures 140 of the enclosure 124 and from the top of the cover 160, to provide convenient locations for attachment of grounding wires. In other examples, however, other configurations are possible.

In some cases, a clamp spacer, a clamp body, or other clamp component can be secured to a splice plate, including as can facilitate easier assembly or adjustment by end users (or others). For example, the clamp spacer 212 includes a securing hole 224 (see FIG. 5) that receives the pair of securing bolts 218 to couple the clamp spacer 212 with the splice plate 202. This can provide improved electrical connection between the components, as well as assist users in more easily staging assembly of the splice assembly 120 (e.g., via preassembly of the connection assembly 122).

Further, in the present example, at least one of the set of clamp bodies 210 may include a similarly configured securing aperture 260. For example, as illustrated, the securing aperture 260 can be concentrically aligned with the securing hole 224 of the clamp spacer 212 (as assembled) so that the relevant clamp body 210 and clamp spacer 212 can be secured to the splice plate 202 together.

Correspondingly, the splice plate 202 may include a secondary aperture 262 that receives the securing bolts 218 and concentrically aligns with the securing hole 224 of the clamp spacer 212 or the securing aperture 260 of the relevant clamp body 210. Thus, components of the clamp assembly 200 that provide conductive and structural connection to the splice plate 202 can be separately secured to the splice plate 202, apart from the eventual connection provided when the clamp assembly 200 is tightened around the conductor 104 and the splice plate 202 (see also, e.g., FIG. 3B). In some examples, this arrangement may provide improved ease of installation as well as improved mechanical and electrical connection in general.

Although a clamp assembly can be particularly useful in some installations, a conductor may be otherwise secured to a splice plate in some cases. For example, some conductors can include a crimped (or other) lug adjacent to an end of the conductor, and the crimped lug may include a hole or other feature that can be used to secure the crimped lug - and the conductor - in position. Correspondingly, for instance, one or more conductors with corresponding lug(s) can be secured by a bolt through a corresponding holes (or holes) of a splice plate or other connector.

Continuing with respect to FIG. 5, the splice plate may include a primary aperture 264 that receives a fastener 268 to couple with a hole 270 in the support post 242. The primary aperture 264 may be tapered to prevent the fastener 268 from bulging outwardly from an upper surface 272 of the splice plate 202 (e.g., and thus interfering with a connection between a conductor and the splice plate 202). The insulation plate 240 and the support plate 204 may include a plurality of apertures 280 that received the mounting bolts 246 and the mounting nuts 248. In some examples, the support plate 204 may include an enlarged aperture 282 with a diameter or width d1 that is equivalent or larger than a diameter or width d2 of the support post 242. Thus, for example, the support posts 242 can be received through the support plate 204 to be secured to the insulation plate 240. The support plate 204 may also include a side flange 290 extending upwardly from the base of the support plate 204, as can provide structural rigidity.

In some cases, this general arrangement of the connection assembly 122 can allow for relatively easy manufacturing and assembly. For example, the splice plate 202, the clamp assemblies 200, the support posts 242, and one or more of the plates 204, 240 can be assembled together outside of an enclosure, then installed into the enclosure as a whole (e.g., to be simply secured, as a unit, with the bolts 246). The enclosure 124 can then be installed in a facility as appropriate, with conductors for the facility secured by the clamp assemblies 200 in appropriately conductive and mechanically secure contact with the splice plate 202. In other examples, however, other assembly methods are possible.

To prevent the enclosure 124 from being electrically energized, the connection assembly 122 can be spaced apart from the various walls of the enclosure 124, within an enclosed internal area. For example, as illustrated in the example configuration of FIGS. 6 and 7, the connection assembly 122 may be spaced relative to the enclosure 124 (rendered transparent in FIGS. 6 and 7) so that no energized components contact the walls of the enclosure 124 (or the cover 160, as further discussed below). In particular, as shown in FIG. 6, the enclosure 124 can define an internal enclosure width WE, and the insulation plate 240 or the support plate 204 can define a smaller plate width WP. In some examples, the splice plate width W can be less than both the enclosure width WE and the plate width WP, and the plate width WP can be less than the enclosure width WE. Thus, a gap is defined between the walls of the enclosure 124 and the connection assembly 122 as viewed from above (see, e.g., gaps 292). In some examples, the width W of the splice plate 202 can be larger than the plate width WP of the insulation plate 240 (or the support plate 204), while still maintaining a gap between the splice plate 202 and walls of the enclosure 124. In some examples, differently sized gap can be provided between a connection assembly and particular enclosure walls. For example, as shown, the gap 292 at opposing ends of the insulation plate 240 may be larger than the gap 292 at opposing lateral sides of the insulation plate 240.

Continuing, the connection assembly 122 can also be spaced apart from the bottom wall 138 and the cover 160 of the enclosure to prevent the enclosure 124 from being electrically energized. FIG. 7, for example, illustrates a side elevational view of the connection assembly 122 disposed within the enclosure 124. In this example, the spacer washer 244 of the connection assembly 122 elevates the insulation plate 240 apart from the bottom wall 138 by a first height H1. Accordingly, when formed from insulating material, the washer 244 can provide a conductivity barrier between the connection assembly 122 and the bottom wall 138 of the enclosure 124. The first height H1 of the spacer washer 244 (and a height of a corresponding stud) may thus be selected to provide a desired height HS of the splice plate 202 (for a given height H2 of the support post 242, etc.), with related effects on the disposition of other components of the connection assembly 122 within the enclosure 124 (e.g., to preserve particular air gaps, as discussed above and below).

Other selections to control the height of a connection assembly are also possible. For example, the support post 242 elevates the splice plate 202 apart from the insulation plate 240 (or the support plate 204) by a second height H2. The second height H2 of the support post 242 may thus also (or alternatively) be selected to provide a particular value for the height HS of the splice plate 202 and associated other components of the connection assembly 122. In some examples, the desired height HS can be aligned with the conductor(s) received through the apertures 140 so that the splice plate 202 provides a contact surface (e.g., a top surface) that is aligned to contact the conductors.

In general, this noted arrangement can help to provide a particular alignment of the connection assembly 122 with conductors that are received into either end of the enclosure 124. For example, to allow for adaptable installation of particular systems (e.g., to splice different numbers or arrays of conductors for the system 100), support posts or spacer washers with a variety of different heights can be provided along with otherwise standardized components. A post with a particular height H1 or a washer with a particular H2 can then be selected for use with for a particular splice assembly of the larger system. For example, differently sized washers or other spacers may be used with an otherwise pre-assembled sub-assembly of the connection assembly 122 to selectively space the sub-assembly at an appropriate height to engage with the particular conductors that are to be spliced together (e.g., corresponding to different entry arrays, as generally discussed above relative to FIG. 8 and otherwise).

Alternatively (or additionally), multiple sub-assemblies of the various connection assemblies 122 can be prepared, with differently sized support posts, so that the various sub-assemblies exhibit different respective heights (or other variations). Correspondingly, for any particular connection node of the system 100, a particular matching sub-assembly (e.g., of a particular height) can be selected from among the available sub-assemblies.

Such approaches, for example, can be used to easily facilitate appropriate final alignment during installation of the connection assembly 122 as a unit into a particular enclosure. Further, the easy customizability provided by the disclosed configuration can generally allow for a high degree adaptability, to align a configuration of a particular connection assembly with the needs of a particular installation site (e.g., a particular connection node).

In different examples, different alignments of splice plates relative to conductors - and apertures for conductors - are possible. For example, as shown in FIG. 7, the splice plate 202 includes an upper surface 298 opposite the bottom surface 296. The upper surface 298 of the splice plate 202 can be arranged to be aligned (e.g., colinearly, horizontally, etc.) with the opening of the cable entry 150 that receives the conductors 104, including through appropriate selection of the first height H1 and the second height H2. In some examples, such an alignment may be with an opening for a lower conductor received into the enclosure 124 (e.g., to secure conductors in a stacked configuration). In some examples, such an alignment may be between conductors, so that a respective conductor may be secured in contact with each of two opposing sides (e.g., top and bottom) of a splice plate. In some examples, such an alignment may be with one or more openings for conductors arrayed laterally across the enclosure 124 (i.e., in an array extending into the page, relative to the perspective of FIG. 7).

In different examples, a variety of cable entry configurations are possible, including various sealing cable entries known in the prior art, example arrangements as illustrated in FIG. 8, or otherwise (e.g., as configured to receive conductors arrayed as shown in FIGS. 11A-11D). In some cases, flexible cable entries secured to an enclosure can in particular accommodate conductors in a wide range of spatial arrangements, and conductors with various shapes and cross sectional sizes (e.g., oblong, braided, insulated conductors).

Some examples can include flexible, sealing cable entries, generally formed from a flexible sleeve that surrounds a conductor, and a sealing base that is secured at an opening in an enclosure. As one example, FIG. 8 illustrates an example configuration for the cable entry 150. In particular, the cable entry 150 can include a sheath 302. In the illustrated embodiment, the sheath 302 is a flexible body. For example, the sheath 302 can be formed from PVC or other suitably flexible material and could thus have flexible properties for accommodating movement of the conductor 104, as inserted therethrough. As appropriate for relevant installations, the material for the sheath 302 can be flame retardant, can withstand a maximum temperature of up to 140 degrees Celsius, or can be resistant to acid, solvent, ultraviolet radiation, etc. In some examples, other flexible materials can be used, including silicone or various thermoplastic elastomers (TPE), for example. In some examples, the sheath 302 of a cable entry can be rigid or can be formed of a composite of rigid and flexible structures. In some examples, the material of the cable entry 150 can provide sealing contact with outer walls of the relevant enclosure 124 (e.g., as illustrated in FIG. 4 for material of the sheath 302).

Generally, the sheath 302 for the cable entry 150 can be shaped to fully surround the conductor 104 (see also FIG. 3A), defining an open interior passage 304 that extends between a first opening 306 at a receiving end 308, and a second opening 310 at an attachment end 312 of the cable entry 150. In the illustrated embodiment, the attachment end 312 can be secured proximate to the enclosure 124 when the cable entry 150 is installed (e.g., to provide a sealed connection, as noted above). Accordingly, the attachment end 312 has a generally rectangular profile, corresponding to the example rectangular profile of the aperture 140. In other examples, other profiles are possible, including as may correspond to differently shaped openings in an enclosure.

Relatedly, cable entries can exhibit openings with various configurations to receive conductors into the cable entry and guide the conductors into an enclosure. For example, as shown in FIG. 8, the first opening 306 defines an oblong rectangular cross-sectional profile that includes rounded corners, as can accommodate conductors 104 having a corresponding oblong (or other) cross-section. In some examples, the first opening 306 at the receiving end 308 of the cable entry 150 can have other cross-sectional profiles to receive conductors having different cross-sectional shapes. For example, the opening 306 at a receiving end 308 of a cable entry 150 can define a circular profile, or an oval profile, or a square profile, etc.

In some examples, the cable entry 150 can be selectively adapted to secure conductors 104 with different cross-sectional areas. For example, as illustrated in FIG. 8, the receiving end 308 can include a tapering structure 320, which can progressively taper in a direction parallel to the insertion direction A of the conductors 104 (e.g., so that a cross-sectional area of the tapering structure 320 is smallest at the first opening 306, and the cross-sectional area increases along the insertion direction A.

Thus, if the cross-sectional area of the tapering structure 320 is too small for the conductor 104 at the first opening 306, a portion of the tapering structure 320 can be removed and the cross-sectional area of the opening 306 can thereby be increased (but at a new location further along the insertion direction A). For example, a peripheral cut can be performed to sever a section of the tapering structure 320, or the structure 320 can be otherwise truncated.
in some examples, the tapering structure 320 can taper in discrete steps. For example, as shown in FIG. 8, the tapering structure 320 can include a tiered structure with a plurality of tiers 322. Each tier, for example, can have a different cross-sectional area, as measured along a plane perpendicular to the insertion direction A. In some examples, the tapering structure 320 can have only two tiers, or more than three tiers. In some examples, the tapering structure 320 may not include tiers, but may instead taper (e.g., angle) continuously between the first opening 306 and second opening 310.

In some cases, during or after installation, conductors 104 can extend from the enclosure 124 at a non-parallel angle relative to an axis of a corresponding aperture or attachment surface of a splice plate. For example, such configurations may be used to accommodate particular arrangements of the system 100, at large, including to reach particular electrical components disposed remotely from the enclosure 124. Accordingly, some configurations of the cable entries 150 as disclosed herein can accommodate different bending angles of the conductor 104 extending therethrough.

As a particular example, in addition to being constructed from a flexible material, the sheath 302 can be shaped to allow flexibility for the conductor 104 to extend therethrough in different directions. In particular, as further illustrated in FIG. 8, the sheath 302 can include a bellows section 330 between the receiving end 308 and the attachment end 312. A portion of the bellows section 330 along an inner radius of a bend can collapse, while an opposite side of the bellows section 330 can expand along an outer radius of a bend to allow the sheath 302 to bend along with a bend in the conductor 104.

In the illustrated example, the bellows section 330 can include a corrugation 332 disposed at an end of the bellows section 330 proximate the receiving end 308. As illustrated, the corrugation 332 can include an expanded cross-width area along upper and lower structures, to a maximum width area at apex, with upper and lower bounding grooves extending along upper and lower edges of the corrugation 332 proximate flanges 336, 338. Thus structured, the corrugation 332 can facilitate bending of the sheath 302, in conjunction with the other geometries of the bellows section 330. In other examples, a differently shaped corrugation can be used (e.g., differently angled or curved moving toward a maximum or minimum width). In some examples, different numbers of corrugations can be used (e.g., in an accordion section with uniform maximum and minimum width).

An attachment end 312 of a cable entry 150 can include features for interfacing with a side wall of the enclosure 124, to at least partially seal the interface of the cable entry 150 and the side wall against the entry of dust or water. For example, as shown in the illustrated embodiment, the attachment end 312 of the sheath 302 includes a sealing flange 340 comprising a protruding portion that extends outwardly around a periphery of the sheath 302. The sealing flange 340 defines a sealing surface 342 that contacts the side wall of the enclosure 124 when the connector is installed, and thus forms a seal between the cable entry 150 and the side wall of the enclosure 124. As further illustrated in FIG. 8, a plurality of fasteners 344 (e.g., bolts or screws) can be provided to secure the cable entry 150 to the side wall of the enclosure 124 (e.g., via engagement with an anchor body within the sheath 302).

In some examples, a connector can accommodate the entry of multiple conductors into an enclosure. In this regard, for example, FIG. 8 illustrates a connector 350, as an alternate configuration of the cable entry 150, with similar numbering for similar components. In particular, the connector 350 includes two tapering structure 360, 362 at the receiving end 308. Correspondingly, in some installations, each tapering structure 360, 362 can receive a respective conductor through first openings 370, 372 therein. Thus, the connector 350 can facilitate the entry of two conductors 104 into the enclosure and can provide similar sealing systems. In other examples, other arrangements can similarly (or otherwise) receive multiple conductors into a connector (e.g., through one or more other tapered or non-tapered entry structures).

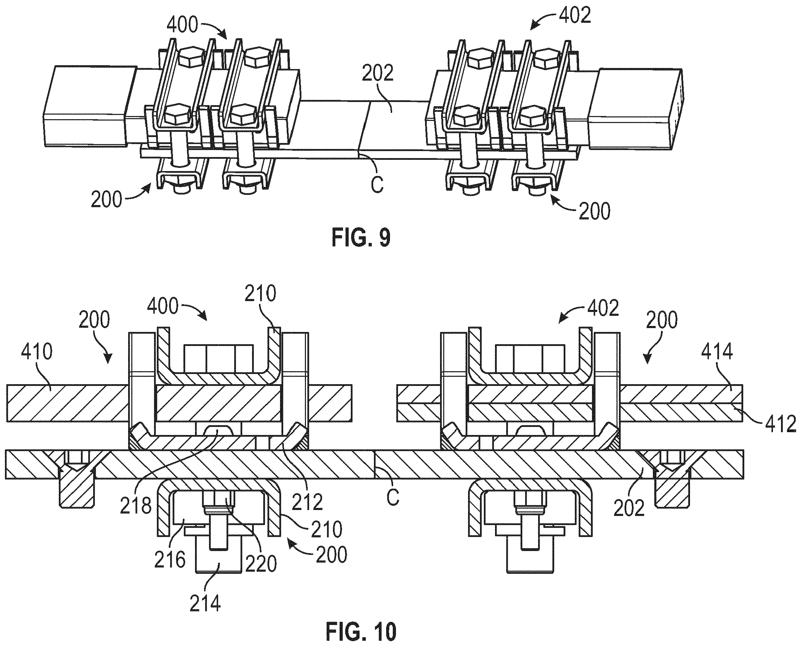

With the adaptable configuration of a splice assembly as disclosed herein, conductors can be secured to a splice plate in a variety of configurations (e.g., after passing through any of a variety of cable entries). As one example, FIG. 9 illustrates single conductors secured to opposing ends of the splice plate 202, both seated on the same side of the splice plate 202 (e.g., corresponding to conductors received from instances of the cable entry 150 with the single opening 306). Correspondingly, the splice plate 202 may include a first clamp region 400 and a second clamp region 402 on opposing sides of a center C. Each of the first and second clamp regions 400, 402 may include one or more of the clamp assemblies 200 (or other clamps) to secure the conductors to the splice plate 202.

In general, the number of clamps (or clamp assemblies) used in particular clamp regions may be adjusted based on the thickness of the conductors (perpendicular to the splice plate) or other cross-sectional characteristic, the length of the splice plate, the number of conductors, a required mechanical or electrical capacity, or other factors. As shown in FIG. 9, for example, two of the clamp assemblies 200 can be used at each (or either) of the clamp regions 400, 402 in some cases. Referring to FIG. 10, as a further example, clamp assemblies can be used in the clamp regions 400, 402 to secure one or multiple conductors. In particular, in the example shown, the first clamp region 400 may include a first conductor 410 secured with a first one of the clamp assemblies 200, and the second clamp region 402 may include a second conductor 412 and a third conductor 414 both secured with another one of clamp assemblies 200. Although single-clamp arrangements as shown may allow for easy and quick installation, multiple clamps can be similarly (or otherwise) used in other examples.

As further discussed below, conductors can be arranged in different types of arrays to be secured to a splice plate. For example, as shown in FIG. 10, the second conductor and the third conductor 412, 414 are secured in a stacked configuration with the clamp assembly 200 (e.g., on the same side of the splice plate 202 as the conductor 410, as shown). Thus, the second conductor 412 is positioned between the splice plate 202 and the third conductor 414 to conductively connect the third conductor 414 with the splice plate 202. Correspondingly, clamping force for each of the conductors 412, 414 is transmitted through the other conductor 412, 414 (i.e., in the example shown, from the upper side of the clamp assembly 200 to the lower conductor 412 via the upper conductor 414, and from the lower side of the clamp assembly 200 to the upper conductor 414 via the lower conductor 412). Thus, for example, robust mechanical and electrical connections can be formed for a variety of conductor arrays, without introducing the additional cost, time, and difficulty inherent to welding operations or other conventional connection system.

FIGS. 11A-11D illustrate other conductor arrangements that can be implemented for the disclosed splice assemblies (and otherwise). As also noted above, the illustrated arrangements can be implemented in the connection assembly 122 with various configurations of the clamp assemblies 200. For example, as shown, two sets of the assemblies 200 can be used per conductor array, with taller or shorter base legs depending on the overall height of the conductor array. However, other clamp assemblies are possible. In general, although particular useful configurations are shown, rectangular (or other) conductors can be arranged in a wide range of n-by-m configuration where n denotes the number of conductors along a particular (e.g., upper) surface of a splice plate in a width direction, and m denotes the number of conductors stacked in a direction away from the surface. The value for n and m may be different or be the same, depending on the needs of a particular installation. Further, although the conductors may generally be arranged parallel to the splice plate, non-parallel arrangements may be possible in some examples. Similarly, although FIGS. 11A-11D show arrays only on a single side and single end of a splice plate, particular configurations can include arrays on opposing sides (e.g., top and bottom) of a splice plate and can include the same or different arrays on opposing ends of the splice plate (e.g., as received through apertures on opposing sides of an enclosure).

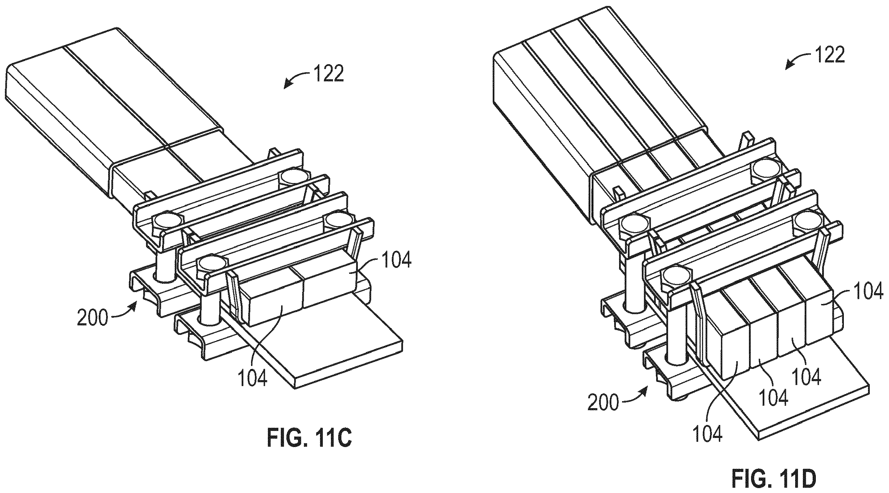

As one example, referring to FIG. 11A, a 2-by-2 arrangement of the conductors 104 is shown, with the clamp assemblies 200 clamping a lower set of conductors between the splice plate and an upper set of conductors. Referring to 11B and 11C, a 1-by-2 and a-2 by-1 configuration of the conductors 104 are shown, respectively, each also using a suitably adapted set of the clamp assemblies 200 as discussed above (e.g., with shorter clamp legs in FIG. 11C).

In some examples, conductors with oblong cross-sections may be arranged with an oblong axis of the cross-section perpendicular to a splice plate. In some cases, this can allow more conductors to be secured adjacent to the splice plate. Referring to FIG. 11D, for example, the conductors 104 can be arranged with oblong (i.e., major or elongate) axes of their rectangular cross-section transverse to the splice plate (e.g., perpendicular to the splice plate, as illustrated).

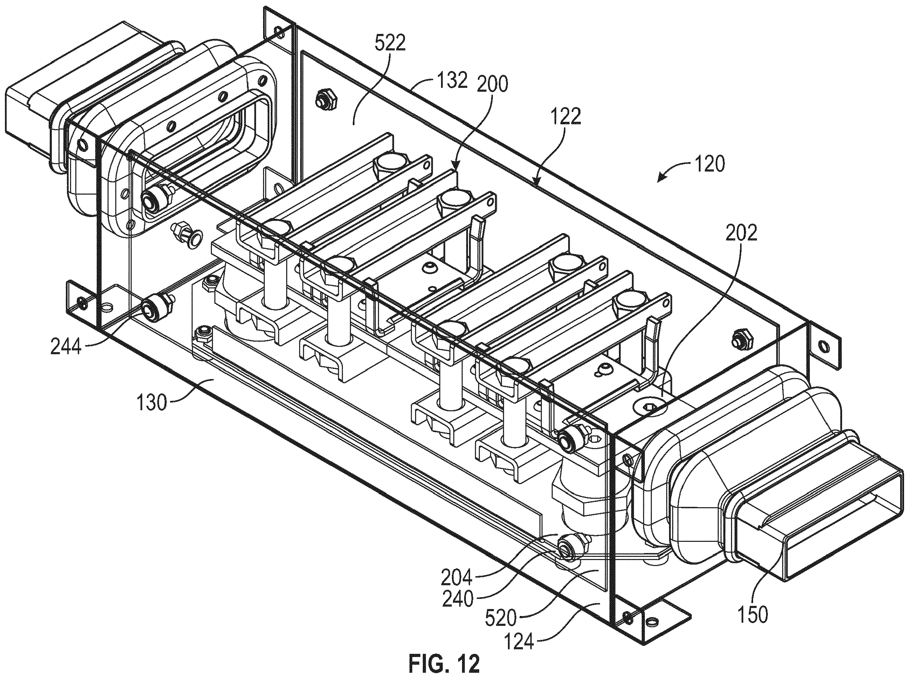

In some examples, further insulating features can be used. For example, some configurations can include internal insulation plates between a connection assembly and one or more walls of an enclosure. In this regard, FIG. 12 illustrates a configuration of the splice assembly 120 of FIGS. 3A and 3B, with a first side insulation plate 520 and a second side insulation plate 522 opposite of the first side insulation plate 520 secured within the enclosure 124. This arrangement, for example, can further help to ensure that no electricity is conducted to the side walls 130, 132 from the connection assembly 122. The plates 520, 522 can be secured with washers 244, similar to the insulation plate 240 and the support plate 204, or in various other ways.

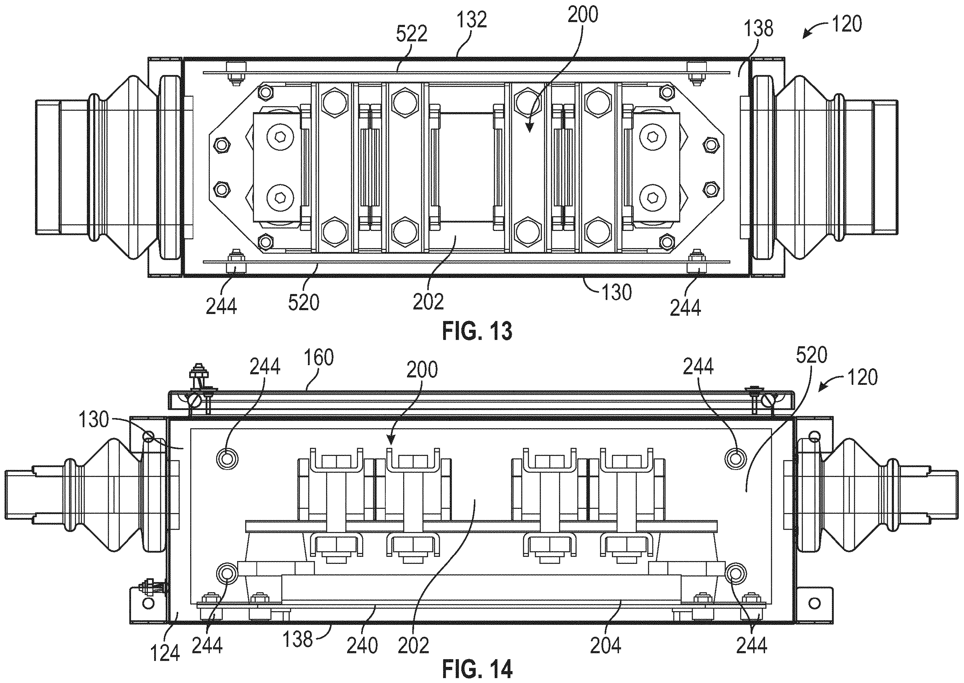

Insulation plates can be configured in various ways in different examples. For example, as shown in FIGS. 13 and 14 in particular, the first side insulation plate 520 is planar and may be installed perpendicular to the insulation plate 240 above the bottom wall 138. Similarly, the first side insulation plate 520 may be smaller than the dimensions (e.g., length and width) of the first side wall 130. In some examples, an insulation plate can also serve as a support plate (e.g., as discussed above relative to the insulation plate 240).

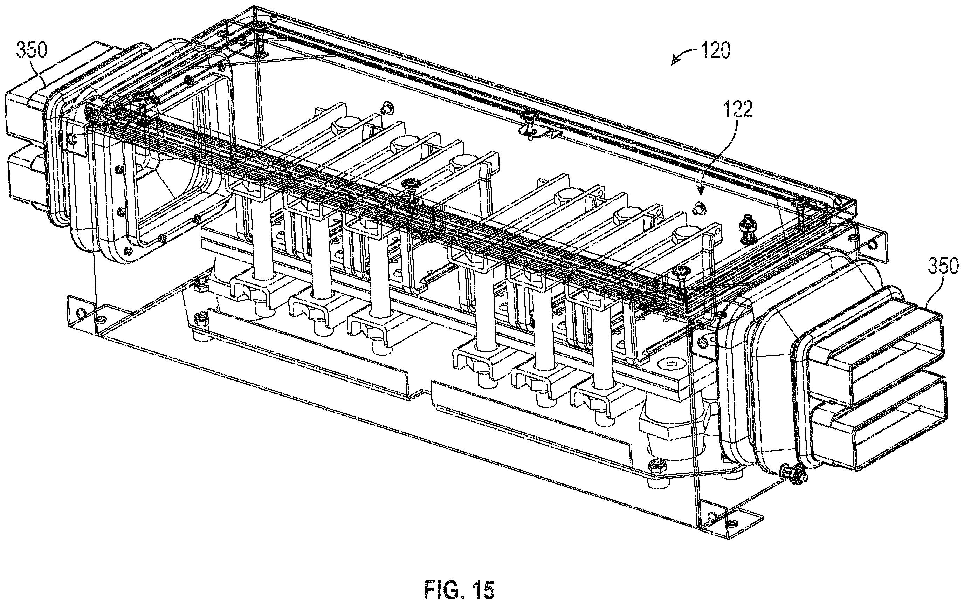

FIG. 15 illustrates another example configuration of the splice assembly 120. The example of FIG. 15 is generally similar to those described above, but is configured in particular to secure two stacked conductors at each end of the connection assembly 122, with three clamp assemblies per clamp region. Correspondingly, for the configuration illustrated in FIG. 15, the apertures 140 provide relatively large, multi-conductor openings on opposing sides of the enclosure 124, with connectors 350 secured at the apertures 140 to receive two conductors each. In other examples, as also generally noted above, other configurations are possible.

FIG. 16 illustrates still another example configuration of the splice assembly 120. The example of FIG. 16 is also generally similar to those described above, including FIG. 15 in particular, but is configured to secure two stacked conductors at each end of the connection assembly 122, with two clamp assemblies per clamp region. Further, a relatively wide splice plate is provided, with a larger width than the conductors clamps of the connection assembly 122. In other examples, as also generally noted above, other configurations are possible.

In some implementations, devices or systems disclosed herein can be utilized, manufactured, installed, etc. using methods embodying aspects of the disclosed technology. Correspondingly, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, should be understood to disclose, as examples of the disclosed technology, the utilized features and implemented capabilities of such device or system.

Thus, splice assemblies according to the disclosed technology can provide improved adaptability to particular site needs, including to securely connect two or more low voltage conductors together between a transformer and one or more other electrical components. Further, some examples can be assembled in a modular fashion (e.g., with a pre-assembled connection assembly, minus the conductors to be spliced), with corresponding improvements in flexibility and efficiency.

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise limited or defined, "integral" and derivatives thereof (e.g., "integrally") describe elements that are manufactured as a single piece without fasteners, adhesive, or the like to secure separate components together. For example, an element stamped or cast as a single-piece component from a single piece of sheet metal or a single mold (etc.), without rivets, screws, or adhesive to hold separately formed pieces together, is an integral (and integrally formed) element. In contrast, an element formed from multiple pieces that are separately formed initially, then later connected together, is not an integral (or integrally formed) element.

Additionally, unless otherwise specified or limited, "substantially coaxial" indicates that the described elements have axes that are substantially parallel with each other (i.e., within ± 6 degrees of parallel) and are aligned so that extension of the axis of one of the elements intersects an axial end of another of the elements (e.g., at or within a diameter or other maximum width thereof, within 50% of a diameter or other maximum width thereof, within 25% of a diameter or other maximum width thereof, or within 5% - or less - of a diameter or other maximum width thereof). Correspondingly, for example, substantially coaxial conductors received into opposing sides of a splice assembly enclosure can extend substantially in parallel with each other within the enclosure, along a common axis within the enclosure (or otherwise), to provide improved alignment for clamping or otherwise securing the conductors to a common splice plate.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. The assemblies and features thereof described may be incorporated into/used in corresponding methods and vice versa.

The previous description of the disclosed examples is provided to enable any person skilled in the art to make or use the disclosed technology. Various modifications to these examples will be readily apparent to those skilled in the art, and the generic principles defined herein may be applied to other examples without departing from the spirit or scope of the disclosed technology. Thus, the disclosed technology is not intended to be limited to the examples shown herein but is to be accorded the widest scope consistent with the principles and novel features disclosed herein.

## Claims

1. A splice assembly (120) for conductors (104) comprising:
an enclosure (124) with a first aperture (140) and a second aperture (140);
a splice plate (202) secured within and surrounded by the enclosure (124);
a first clamp (200) secured at a first end of the splice plate (202);
a second clamp (200) secured at a second end of the splice plate (202);
a first conductor (104) extending through the first aperture (140) and secured to the splice plate (202) with the first clamp (200); and
a second conductor (104) extending through the second aperture (140) and secured to the splice plate (202) with the second clamp (200) to be electrically connected to the first conductor (104) via the splice plate (202).

2. The splice assembly (120) of claim 1, further comprising:
a third conductor (104) extending through the first aperture (140) and secured to the splice plate (202) to be electrically connected to the second conductor (104) via the splice plate (202), wherein optionally or preferably the third conductor (104) is secured to the splice plate (202) with the first clamp (200).

3. The splice assembly (120) of claim 2, wherein the first and third conductors (104) are secured on the same side of the splice plate (202).

4. The splice assembly (120) of claim 3, wherein the first and third conductors (104) are arrayed laterally across the splice plate (202), with both of the first and third conductors (104) contacting the splice plate (202) to provide a respective electrical connection with the splice plate (202), and optionally or preferably wherein the first conductor (104) defines a first oblong cross-section, the second conductor (104) defines a second oblong cross-section, and the first and second conductors (104) are secured to the splice plate (202) with oblong axes of the first and second oblong cross-sections extending away from the splice plate (202).

5. The splice assembly (120) of claim 3, wherein the first and third conductors (104) are stacked together on the splice plate (202), with the first conductor (104) between the third conductor (104) and the splice plate (202) to electrically connect the third conductor (104) to the splice plate (202), and clamping force to secure each of the first and third conductors (104) to the splice plate (202) is transmitted through the other of the first and third conductors (104).

6. The splice assembly (120) of any of the preceding claims, wherein the first clamp (200) includes a first clamp body (210), a second clamp body (210), and a first spacer (212) that includes a base seated on the splice plate (202) and legs (226) extending away from the splice plate (202) on opposing sides of the base; and
wherein the first conductor (104) is secured to the splice plate (202) with the first and second clamp body (210) tightened to clamp the first conductor (104), with the first conductor (104) extending along the base between the legs (226).

7. The splice assembly (120) of claim 6, wherein one or more of the first clamp body (210) or the spacer (212) is secured to the splice plate (202) with one or more fasteners and, optionally or preferably, wherein the first clamp body (210) and the spacer (212) are collectively secured to the splice plate (202) with one or more of the same fasteners.

8. The splice assembly (120) of any of the preceding claims, further comprising a collectively removable sub-assembly that includes:
the splice plate (202);
an insulation plate (240) secured within the enclosure (124), with the insulation plate (240) electrically insulated from exterior walls of the enclosure (124); and
support posts (242) secured to the insulation plate (240) and to the splice plate (202), with the support posts (242) spacing the splice plate (202) apart from the insulation plate (240).

9. The splice assembly (120) of claim 8, wherein the sub-assembly further includes a support plate (204) secured to the insulation plate (240) to be disposed between the insulation plate (240) and splice plate (202), optionally or preferably with the support plate (204) adjacent to the insulation plate (240) and side flanges (290) of the support plate (204) extending away from the insulation plate (240).

10. The splice assembly (120) of any of the preceding claims, wherein the first conductor (104) extends through a first cable entry (150) arranged to seal the first aperture (140) around the first conductor (104); and
wherein the second conductor (104) extends through a second cable entry (150) arranged to seal the second aperture (140) around the second conductor (104).

11. A power distribution assembly comprising:
a plurality of conductors (104) arranged to transmit power between a plurality of electrical components; and
an array of splice assemblies according to any of the preceding claims, each of the splice assemblies electrically connecting corresponding one or more sets of conductors (104) of the plurality of conductors (104), and
optionally or preferably wherein one or more of:
the plurality of conductors (104) includes a plurality of oblong conductors; or
the electrical components include a transformer and a power distribution module.

12. A method of connecting conductors (! 04), the method comprising:
extending a first conductor (104) through a first aperture (140) of an enclosure (124);
extending a second conductor (104) through a second aperture (140) of the enclosure (124);
securing the first conductor (104) to a splice plate (202) with a first clamp (200), the splice plate (202) being secured within the enclosure (124); and
securing the second conductor to the splice plate (202) with a second clamp (200) so that the second conductor (104) is electrically connected to the first conductor (104) via the splice plate (202).

13. The method of claim 12, further comprising:
securing multiple conductors (104) to the splice plate (202) with the first clamp (200), including the first conductor (104) and a third conductor(104);
wherein one of:
the third conductor (104) is arranged on an opposite side of the first conductor (104) from the splice plate (202), with the third conductor (104) in conductive connection with the splice plate (202) via the first conductor (104) ; or
the first conductor (104) and the third conductor (104) are both seated on the splice plate (202) on the same side of the splice plate (202).

14. The method of either of claims 12 or 13, wherein the splice plate (202) is installed into and secured within the enclosure as part of a collectively removable sub-assembly that includes an insulation plate (240), the splice plate (202), and spacers (212) that space the splice plate (202) apart from the insulation plate (240).

15. The method of any of claims 12 through 14, further comprising:
after securing the first and second conductors to the splice plate (202), securing a removable cover (160) to close the enclosure to surround the splice plate (202).
